# EUROPÄISCHE PATENTSCHRIFT

(11) **EP 2 885 616 B1**
(45) Veröffentlichungstag und Bekanntmachung des Hinweises auf die Patenterteilung: **25.01.2017**
(21) Anmeldenummer: 13801463.4
(22) Anmeldetag: 15.08.2013
(51) Int. Cl.: G01L 1/26, G01L 1/22, G01G 3/14

(54) **KRAFTAUFNEHMERKONSTRUKTION**
FORCE TRANSDUCER CONSTRUCTION
STRUCTURE DE CAPTEUR DE FORCE

(30) Priorität: 15.08.2012 DE 102012016182
(43) Veröffentlichungstag der Anmeldung: 24.06.2015
(73) Patentinhaber: Hottinger Baldwin Messtechnik GmbH, 64293 Darmstadt (DE)
(72) Erfinder: SCHUSTER, Hans, 64347 Griesheim (DE); JAUCH, Christian, 64331 Weiterstadt (DE)
(74) Vertreter: Staudte, Ralph
(86) Internationale Anmeldenummer: PCT/DE2013/000465
(87) Internationale Veröffentlichungsnummer: WO 2015/021951

(56) Entgegenhaltungen:
- US-A1- 2002 059 840
- US-A1- 2004 187 608

## Beschreibung

Die Erfindung betrifft eine Kraftaufnehmerkonstruktion, bei welcher der Kraftaufnehmer unter Krafteinwirkung verformt wird, sodass sich bevorzugt ausgewählte Abschnitte deformieren, an denen Dehnungssensoren angeordnet sind. Die Erfindung betrifft eine Kraftaufnehmerkonstruktion, bei welcher bevorzugt ausgewählte und mit Dehnungssensoren versehene Abschnitte unter Krafteinwirkung verformt werden. Die Erfindung betrifft insbesondere eine Kraftaufnehmerkonstruktion, die in sicherheitsrelevanten Bereichen eingesetzt wird.

Kraftaufnehmer sind aus dem Stand der Technik hinreichend bekannt. So wird in dem Dokument DE 102 29 739 A1 eine Wägezelle beschrieben, deren Kraftaufnehmer als ein sogenannter Doppelbiegebalken ausgebildet ist. Derartige Konstruktionen sind relativ empfindlich gegen mechanische Überbelastung. Daher ist es üblich, Anschläge zur Begrenzung der Verformung vorzusehen, um eine Zerstörung des Kraftaufnehmers durch Überlastung zu vermeiden.

In dem Dokument US 2002/0059840 A1 ist eine Vorrichtung beschrieben, mit der die Belegung eines Fahrzeugsitzes erfasst werden kann. Diese beinhaltet zwei einander gegenüberliegende Verformungskörper mit jeweils an Stellen mit verjüngtem Querschnitt angebrachten Dehnungsmessstreifen zur Messung der Materialdehnung. Darüber hinaus ist in dem Dokument US 2004/0187608 A1 eine Wägezelle beschrieben, deren Biegebalken mittels Anschlägen vor einer übermäßigen Belastung geschützt wird.

Kraftaufnehmer werden oft aus Stahl oder speziellen Aluminiumlegierungen hergestellt. Aus der Praxis ist bekannt, dass es bei solchen Materialien zu sogenannten Ermüdungsbrüchen kommen kann. Diese Ermüdungsbrüche treten unkontrollierbar auch dann auf, wenn das Material ausschließlich im zulässigen elastischen Bereich verformt wird. Demzufolge ist es möglich, dass ein Kraftaufnehmer auch dann bricht, wenn er nicht über seine Nennlast hinaus belastet worden ist.

Es gibt sicherheitsrelevante Bereiche, in denen gewährleistet werden muss, dass auch nach einem Bruch des Kraftaufnehmers die für diesen vorgesehene Funktion erhalten bleibt. Solche Anforderungen bestehen z. B. bei Flugzeugen, um deren Steuerbarkeit zu gewährleisten.

Aufgabe der Erfindung ist die Bereitstellung eines Kraftaufnehmers, welcher selbst bei Bruch im Wesentlichen funktionsfähig bleibt.

Diese Aufgabe wird mit einer Kraftaufnehmerkonstruktion nach Anspruch 1 mit nachfolgenden Merkmalen gelöst: einem ersten Verformungskörper, auf den eine zu messende Kraft einwirkt. An oder in dem Verformungskörper sind Sensoren zur Messung der Materialdehnung angeordnet. Um die Messgenauigkeit zu verbessern, sind die Sensoren an vorbestimmten Applikationsstellen des Verformungskörpers angeordnet. Diese Applikationsstellen sind Abschnitte mit verjüngtem Querschnitt. Wenn die zu messende Kraft auf den Verformungskörper einwirkt, wird die Oberfläche der Applikationsstelle gestreckt oder gestaucht. Diese positive oder negative Dehnung wird mittels der Dehnungssensoren erfasst. An den Applikationsstellen mit verjüngtem Querschnitt entsteht bei der Einwirkung der zu messenden Kraft die höchste Dehnung. Falls es durch Überlastung oder durch Dauerbelastung zu einem Bruch des Verformungskörpers kommen sollte, erfolgt dieser an der Applikationsstelle mit verjüngtem Querschnitt oder an einer dieser Applikationsstellen.

Weiterhin vorgesehen sind ein zweiter Verformungskörper, an dem ebenfalls Sensoren zur Messung der Materialdehnung appliziert sind, und eine Führung, die den ersten Verformungskörper bei einem Bruch am Abschnitt mit der Verjüngung im Wesentlichen in seiner bisherigen Funktionsstellung hält und bei weiterer Krafteinwirkung an den zweiten Verformungskörper führt. Dadurch ist gewährleistet, dass der zweite Verformungskörper mit der zu messenden Kraft belastet wird. Somit ist sichergestellt, dass auch bei einem Totalausfall des ersten Verformungskörpers die einwirkende Kraft mittels des zweiten Verformungskörpers gemessen werden kann. Es ist besonders zu betonen, dass die Kraftumleitung auf den zweiten Verformungskörper unter Belastung erfolgt.

Nach Anspruch 2 weist der zweite Verformungskörper eine wenigstens 5-fach höhere Nennlast als der erste Verformungskörper auf. Der Vorteil dieser Weiterbildung der Kraftaufnehmerkonstruktion nach Anspruch 1 besteht darin, dass ein hoher Überlastschutz gewährleistet ist und daher keine zusätzlichen Überlastsicherungen oder Anschläge erforderlich sind.

Nach Anspruch 3 weist der zweite Verformungskörper die gleiche Nennlast auf wie der erste Verformungskörper. Zusätzlich ist ein dritter Verformungskörper mit Sensoren vorgesehen, welcher bei Überschreitung der Nennlast des zweiten Verformungskörpers von diesem berührt wird. Dieser dritte Verformungskörper wirkt einerseits wie ein herkömmlicher, elastischer Lastbegrenzungsanschlag, anderseits kann damit die Höhe der Überbelastung ermittelt werden.

Die Kraftaufnehmerkonstruktion und ihre Ausführungsformen werden anhand von schematischen Zeichnungen näher erläutert:
- Fig. 1: zeigt einen Biegelbalken-Kraftaufnehmer nach dem Stand der Technik zur Erläuterung.
- Fig. 2: zeigt einen Betätigungsmechanismus mit Überlastanschlägen nach dem Stand der Technik zur Erläuterung.
- Fig. 3: zeigt einen Betätigungsmechanismus mit einem zusätzlichen Verformungskörper.
- Fig. 4: zeigt den Betätigungsmechanismus nach Fig. 3 mit einem gebrochenen ersten Verformungskörper.
- Fig. 5: zeigt den Betätigungsmechanismus nach Fig. 3 mit einem verstärkten zweiten Verformungskörper.
- Fig. 6: zeigt den Betätigungsmechanismus nach Fig. 3 mit Überlastanschlägen für den zweiten Verformungskörper.
- Fig. 7: zeigt den Betätigungsmechanismus nach Fig. 3 mit einem dritten Verformungskörper.

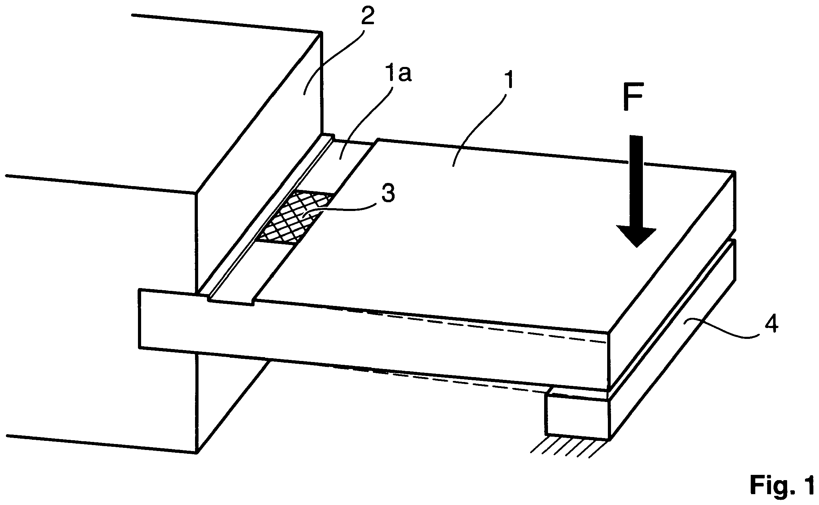

Die Fig. 1 zeigt einen Biegebalken-Kraftaufnehmer 1 in Form einer Blattfeder, die in einer starren Basis 2 befestigt ist. Der Biegebalken-Kraftaufnehmer 1 wird an seinem freien Ende mit einer Kraft F belastet. In der Nähe der Einspannstelle weist der Biegebalken-Kraftaufnehmer 1 eine Verjüngung 1 a auf, in der ein Dehnungsmessstreifen 3 befestigt ist. Bei einer unzulässig großen Kraft besteht die Gefahr, dass der Biegebalken-Kraftaufnehmer 1 irreversibel deformiert und der Dehnungsmessstreifen 3 zerstört wird. Daher ist ein Überlastanschlag 4 vorgesehen, der die Durchbiegung des Biegebalken-Kraftaufnehmers 1 begrenzt. Es ist jedoch möglich, dass der Biegebalken-Kraftaufnehmer 1 an der Verjüngung 1 a bricht, ohne dass eine Überlastung stattgefunden hat. Solche Ermüdungsbrüche direkt an der Stelle, an welcher der Dehnungsmessstreifen 3 befestigt ist, führen zu einer mechanischen, aber auch elektrischen Zerstörung des Messsystems und somit zu dessen Totalausfall.

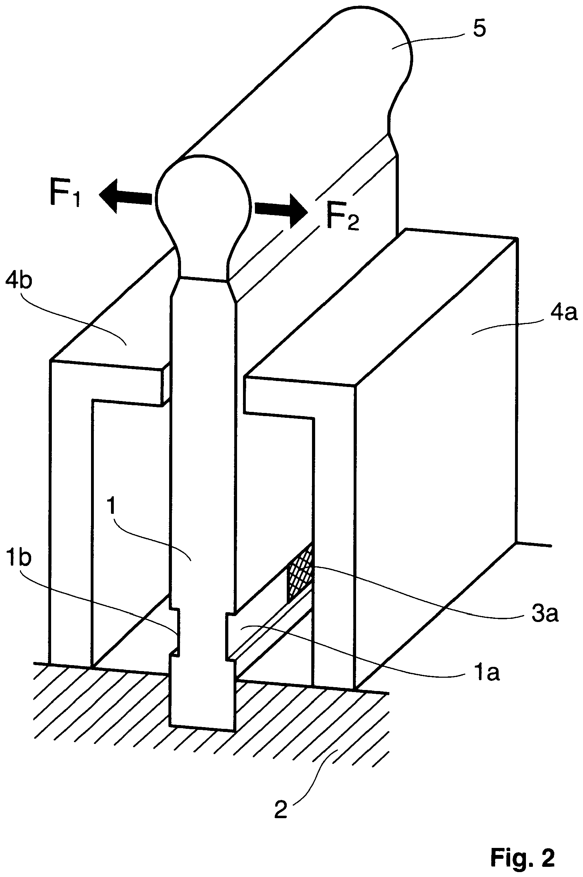

Die Fig. 2 zeigt einen Betätigungsmechanismus mit einem Handgriff 5, der in die durch die zwei Kraftpfeile F1, F2 angezeigten Richtungen gedrückt wird. Es kann sich z. B. um die Handsteuerung für ein Flugzeug handeln. Der Handgriff 5 ist mit dem Ende eines ersten Verformungskörpers 1 verbunden. Die mechanische und elektrische Funktion dieses ersten Verformungskörpers 1 ist identisch mit der Funktion des Biegebalken-Kraftaufnehmers 1 aus Fig. 1. Es sind zwei Verjüngungen 1 a, 1 b vorgesehen, in denen zwei Dehnungsmessstreifen 3a, 3b befestigt sind, wobei der Dehnungsmessstreifen 3b nicht gezeigt ist. Da die Kräfte F1 und F2 in zwei Richtungen angreifen, sind zwei Überlastanschläge 4a, 4b angeordnet. Falls der Biegebalken-Kraftaufnehmer 1 an der verjüngten Stelle bricht, wäre eine Steuerung des Flugzeugs nicht mehr möglich.

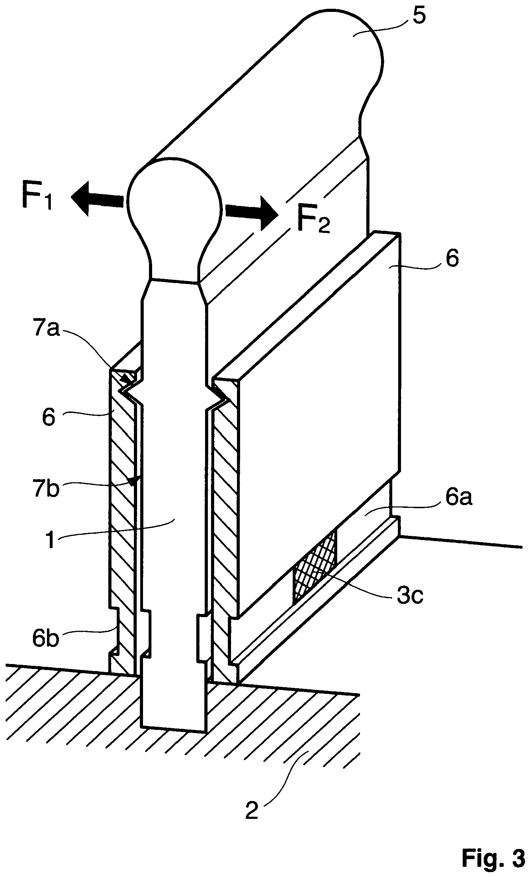

Die Fig. 3 zeigt einen Betätigungsmechanismus mit einem zusätzlichen Verformungskörper, nachfolgend als zweiter Verformungskörper 6 bezeichnet. Dieser Verformungskörper 6 ist zweiteilig und beidseitig beanstandet von dem ersten Verformungskörper 1 angeordnet. Der Verformungskörper 6 weist Abschnitte mit

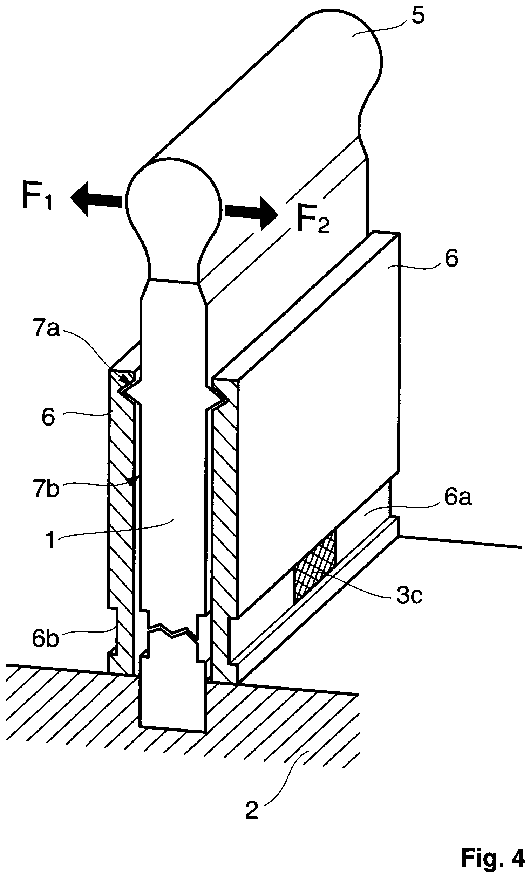

Verjüngungen 6a, 6b auf, in welchen Dehnungsmessstreifen 3c, 3d befestigt sind, wobei der Dehnungsmessstreifen 3d nicht gezeigt ist. Der zweite Verformungskörper 6 umschließt den Verformungskörper 1 von beiden Seiten und bildet im Falle eines Bruches des ersten Verformungskörpers eine Führung und Halterung 7a, 7b für diesen, wie in Fig. 4 gezeigt.

Wenn der Verformungskörper 1, wie in Fig. 4 gezeigt, gebrochen ist, wäre ein Flugzeug oder ein anderes Fahrzeug nicht mehr steuerbar. Da jedoch der abgebrochene Verformungskörper 1 in der Führung 7a, 7b gehalten und geführt wird und somit die über den Handgriff 5 eingeleiteten Kräfte auf den zweiten Verformungskörper 6 geleitet werden, kann der Steuerungsvorgang nahezu ohne Unterbrechung weitergeführt werden. Dazu ist auch eine aus dem Stand der Technik bekannte Elektronik vorzusehen, die eine automatische Umschaltung auf den Messkanal des zweiten Verformungskörpers 6, d. h. auf dessen Dehnungsmessstreifen 3c, 3d bewirkt. Diese Elektronik ist jedoch nicht Gegenstand der Erfindung.

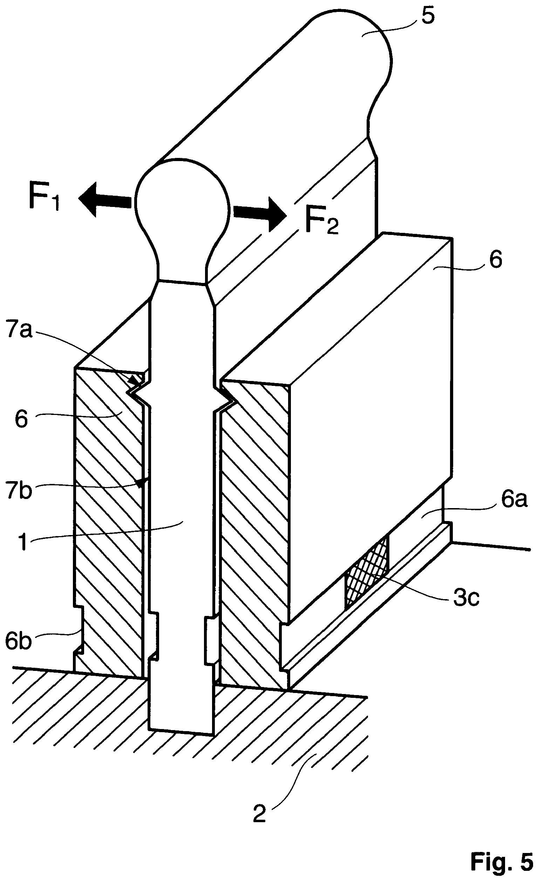

Die Fig. 5 zeigt eine Kraftaufnehmerkonstruktion mit einem zweiten Verformungskörper 6, der im Vergleich zum Verformungskörper 1 eine 5fach höhere Nennlast aufweist. Dadurch wirkt dieser Verformungskörper 6 gleichzeitig als mechanischer Überlastschutz. Dazu ist auch eine aus dem Stand der Technik bekannte Elektronik vorzusehen, die eine automatische Umschaltung auf den Messkanal des Verformungskörpers 6, d. h. auf dessen Dehnungsmessstreifen 3c, 3d, und weiterhin eine zusätzliche Verstärkung der Messsignale bewirkt. Die zusätzliche Verstärkung der Messsignale ist deshalb erforderlich, da auf Grund der größeren Steifheit des Verformungskörpers 6 bei gleicher Kraft nur eine geringere Dehnung an den Applikationsstellen der Dehnungsmessstreifen 3c, 3d und somit auch nur ein geringeres elektrisches Messsignal entsteht. Diese Elektronik ist jedoch nicht Gegenstand der Erfindung.

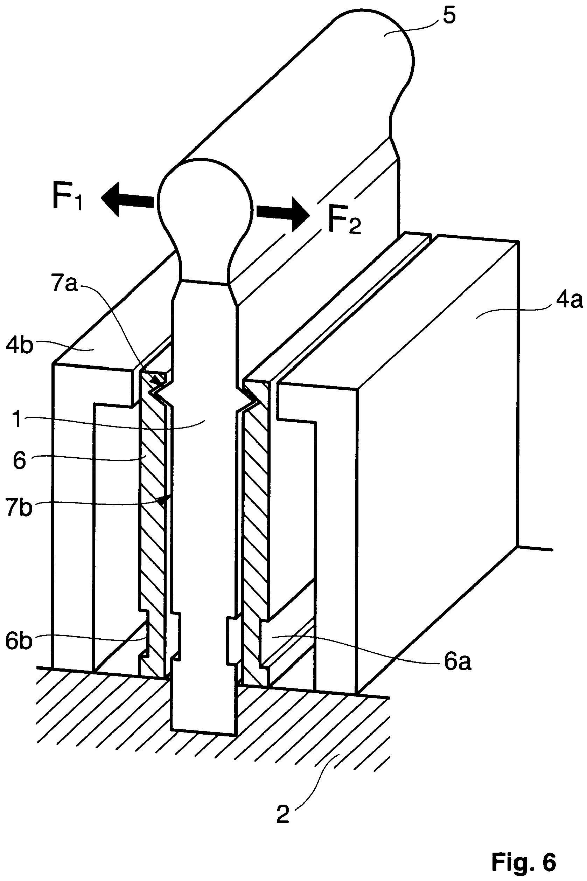

Die Fig. 6 zeigt den Betätigungsmechanismus nach Fig. 3 mit Überlastanschlägen 4a, 4b für den zweiten Verformungskörper. Damit wird ein robuster und kostengünstiger Aufbau des Betätigungsmechanismus erreicht.

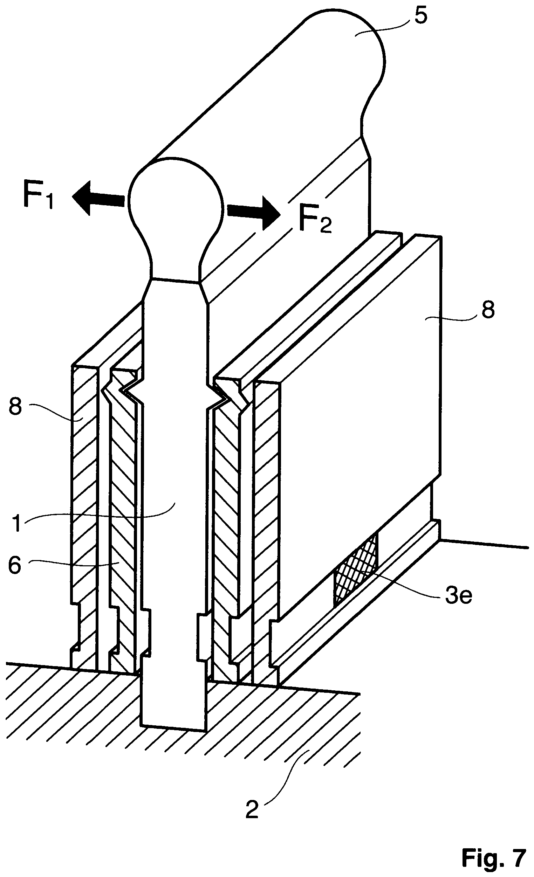

Die Fig. 7 zeigt den Betätigungsmechanismus nach Fig. 3 mit einem dritten Verformungskörper 8, an dem ebenfalls Dehnungsmessstreifen 3e, 3f befestigt sind, wobei der Dehnungsmessstreifen 3f nicht gezeigt ist. Falls der erste Verformungskörper 1 bricht, wird die Kraft auf den zweiten Verformungskörper 6 geleitet. Der dritte Verformungskörper 8 dient als Überlastschutz wie bei dem Betätigungsmechanismus nach Fig. 6. Da an diesem dritten Verformungskörper 8 ebenfalls Dehnungsmesstreifen 3e, 3f angeordnet sind, kann eine Steuerung auch dann noch durchgeführt werden, wenn durch den Bruch des ersten Verformungskörpers 1 der zweite Verformungskörper 6 mit beschädigt wird.

## Patentansprüche

1. Kraftaufnehmerkonstruktion mit nachfolgenden Merkmalen:
- einem ersten Verformungskörper (1), auf den eine zu messende Kraft (F) einwirkt, wobei an oder in dem Verformungskörper (1), an Stellen mit verjüngtem Querschnitt (1a), Sensoren (3a, 3b) zur Messung der Materialdehnung an diesen Stellen angeordnet sind,
- einem zweiten Verformungskörper (6), an dem Sensoren (3c, 3d) zur Messung der Materialdehnung vorgesehen sind, **dadurch gekennzeichnet, dass**:
- der zweite Verformungskörper (6) den ersten Verformungskörper (1) von beiden Seiten umschließt und eine Führung (7a, 7b), bildet, die den ersten Verformungskörper (1) bei einem Bruch an der Stelle mit verjüngtem Querschnitt (1 a) im Wesentlichen in seiner Funktionsstellung hält und bei weiterer Krafteinwirkung gegen den zweiten Verformungskörper (6) führt.

2. Kraftaufnehmerkonstruktion nach Anspruch 1, wobei der zweite Verformungskörper (6) eine wenigstens 5-fach größere Nennlast als der erste Verformungskörper (1) aufweist.

3. Kraftaufnehmerkonstruktion nach Anspruch 1, wobei der zweite Verformungskörper (6) die gleiche Nennlast aufweist wie der erste Verformungskörper (1) und ein dritter Verformungskörper (8) mit Sensoren (3e, 3f) vorgesehen ist, gegen den der zweite Verformungskörper (6) bei Überschreitung von dessen Nennlast gedrückt wird.

## Claims

1. A force transducer construction having the following features:
- a first deformation member (1) acted upon by a force (F) to be measured, wherein sensors (3a, 3b) for measuring the strain at locations with a narrowed cross-section (1 a) are arranged on or in said deformation member (1) at said locations,
- a second deformation member (6), at which sensors (3c, 3d) for measuring the strain are provided, **characterised in that**:
- the second deformation member (6) encloses the first deformation member (1) on both sides and forms a guide (7a, 7b) which holds the first deformation member (1) substantially in the functional position thereof in the event of a fracture at the location with a narrowed cross-section (1a) and guides the first deformation member towards the second deformation member (6) on further application of force.

2. The force transducer construction according to claim 1, wherein the second deformation member (6) has a rated load which is at least five times greater than that of the first deformation member (1).

3. The force transducer construction according to claim 1, wherein the second deformation member (6) has the same rated load as the first deformation member (1), and a third deformation member (8) with sensors (3e, 3f) is provided, against which the second deformation member (6) is pressed when its rated load is exceeded.

## Revendications

1. Structure de capteur de force ayant les caractéristiques suivantes:
- un premier corps déformable (1) sur lequel agit une force (F) à mesurer, dans laquelle des capteurs (3a, 3b) destinés à la mesure de l'allongement du matériau à des emplacements à section réduite (1 a) sont disposés sur ou dans le corps déformable (1) à ces emplacements,
- un deuxième corps déformable (6) sur lequel sont prévus des capteurs (3c, 3d) destinés à la mesure de l'allongement du matériau, **caractérisée en ce que**:
- le deuxième corps déformable (6) entoure le premier corps déformable (1) sur les deux côtés et forme un élément de guidage (7a, 7b) qui retient le premier corps déformable (1) essentiellement dans sa position fonctionnelle en cas de rupture à l'emplacement à section réduite (1a) et qui guide le premier corps déformable contre le deuxième corps déformable (6) en cas d'application ultérieure de force.

2. Structure de capteur de force selon la revendication 1, dans laquelle le deuxième corps déformable (6) présente une charge nominale qui est au moins cinq fois plus grande que celle du premier corps déformable (1).

3. Structure de capteur de force selon la revendication 1, dans laquelle le deuxième corps déformable (6) présente la même charge nominale que le premier corps déformable (1) et dans laquelle un troisième corps déformable (8) doté de capteurs (3e, 3f) est prévu, contre lequel est pressé le deuxième corps déformable (6) en cas de dépassement de sa charge nominale.
